Europäisches Patentamt

European Patent Office

Office européen des brevets

(19)

(11) Publication number: **0 391 704**

**A1**

(12) # EUROPEAN PATENT APPLICATION

(21) Application number: **90303642.4**

(51) Int. Cl.⁵: **F03D 7/02**

(22) Date of filing: **04.04.90**

(30) Priority: **04.04.89 GB 8907545**

(43) Date of publication of application:
**10.10.90 Bulletin 90/41**

(84) Designated Contracting States:
**CH DE DK FR GB LI NL SE**

(71) Applicant: **Kidd, Archibald Watson
Seend Close Seend
Melksham Wiltshire(GB)**

(72) Inventor: **Kidd, Archibald Watson
Seend Close Seend
Melksham Wiltshire(GB)**

(74) Representative: **Ford, Michael Frederick et al
MEWBURN ELLIS 2 Cursitor Street
London EC4A 1BQ(GB)**

(54) **Automatic feathering gear for windmill blades.**

(57) A windmill having concentric rings, 12, 14, with multiple blades 16 pivoted to and extending between them has springs to position the blades 16 against wind pressure and hydraulic damping of blade motion.

FIG.2

FIG.3

EP 0 391 704 A1

## AUTOMATIC FEATHERING GEAR FOR WINDMILL

In a multi-bladed power windmill, e.g of the type where there is an inner and an outer supporting ring carrying blades, perhaps 36 in number, though a greater or lesser number may be used, it is desirable to be able to alter the pitch or attitude of the blades to accommodate increase or decrease of the wind velocity. In an extreme case of a violent gale or hurricane, the blades should feather right back to an attitude nearly in line with the wind direction so as to reduce wind pressure on the structure of the windmill. It is further desirable that this trimming or feathering of the blades should be automatic.

Springs may be used to load the blades, said springs acting to keep the blades in a fine pitch attitude in moderate winds but allowing them to open out or feather as the wind speed increases. Tension coil spring links may be used, but it would be equally possible to use compression springs, leaf springs or torsion springs to achieve the desired objective.

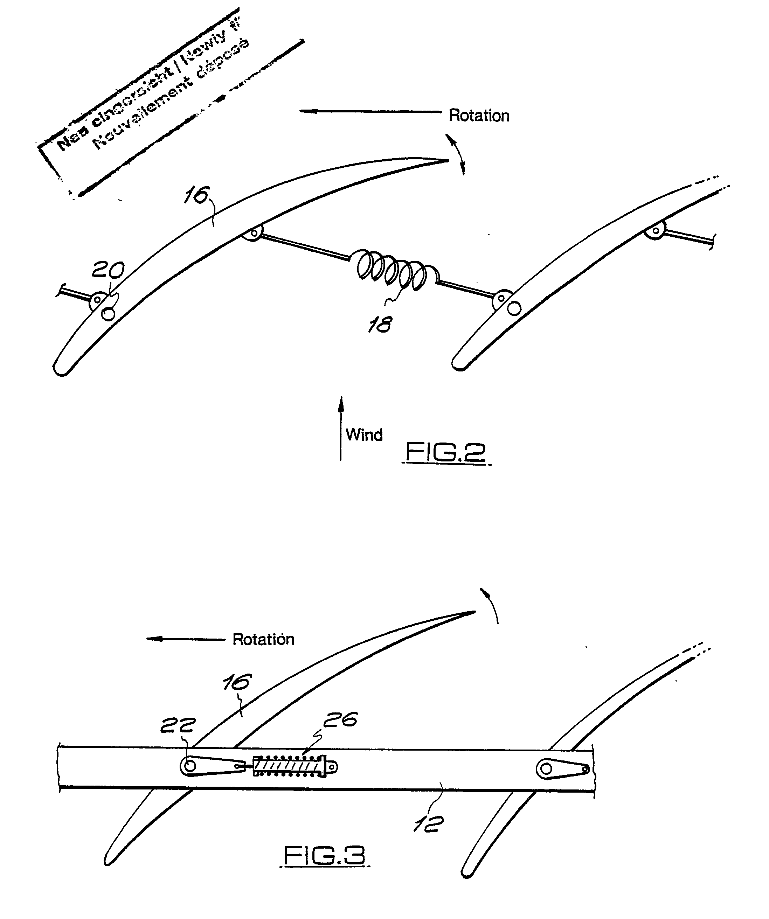

Since the blades on a large windmill may be quite long, say eight or more metres and perhaps two or three metres wide, the point of application or attachment of the springs needs choosing with care and may be at either or both ends of each blade or at any intermediate point or points along its length. Fig 2. We will assume for the moment however, that the spring action is brought to bear about halfway along the length of the blade, in which case the spring link could be from a point well to the downwind axis of one blade to a point at or near the axis of the one trailing it. In this way by choosing a spring of the correct rate and also its exact attachment points, an approximately correct wind speed to blade angle correllation can be obtained.

However in practice such an arrangement, while coming close to the main requirement of pitch control, would be troublesome because in gusty winds the blades would to some extent flutter and flap about. Even in steady wind conditions the wind velocity at the highest point of a revolution of the windmill rotor would be likely to be greater than that at the lowest point due to what is called the "ground effect" whereby there is an increasing velocity gradient as you get higher off the ground and vice versa. Thus a blade would incline to feather-off slightly at the top of the circle of its flight and close back slightly at the bottom. This oscillaton every revolution would lead to vibration and undue wear to say the least. The fitting of silentbloc bushes at the attachment points of each spring link would not cure this problem. although it would reduce or eliminate high frequency vibration.

According to this invention, a windmill having an annular supporting structure, such as concentric inner and outer annular supports, with a plurality of blades pivotally mounted to the supporting structure and spring means connected to the blades to permit pivotal motion (feathering) of the blades in response to variation in wind pressure, is characterised by the provision of damping means to retard pivotal motion of the blades.

It is desirable that the damping means is able to restrain oscillation having frequency below about 300 cycles per minute. The or each spring means will generally have a captive part (e.g. a fixed end) which is attached to a said support, and a moving part (e.g. a free end) which is attached to a blade or blades. Desirably then the damping means serves to retard motion of the moving part relative to the captive part.

Preferably the damping means is hydraulic.

In a preferred arrangement each blade has a pitch control spring arrangement associated with a damper unit. This damper unit may be a hydraulic device of any practical design. Other arrangements are possible and friction dampers could be designed to give long and satisfactory performance. They would however almost certainly require more care and attention than hydraulic units.

Each hydraulic damper unit will operate in parallel with the pitch control spring. Said springs may therefore conveniently be mounted on the outside of damper cylinders.

An embodiment of the invention will be described with reference to the accompanying drawings in which

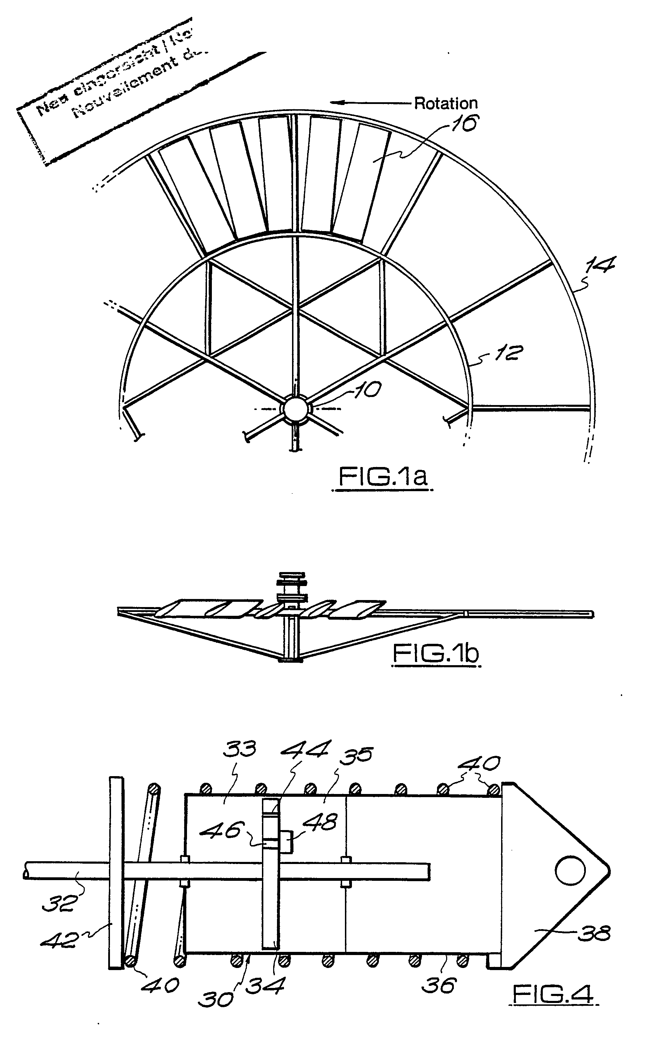

Fig 1a is a partial front elevation of a windmill rotor;

Fig 1b is a plan view of the rotor;

Fig 2 is a schematic cross section through two blades of the rotor illustrating the function;

Fig 3 shows a constructional arrangement;

Fig 4 is a schematic sectional view of a damper.

Although in the foregoing we have for reasons of clarity assumed that the spring/damper tension control mechanism associated with each blade is connected about halfway along the length of the blade, it may well prove in practice that the mechanism is better situated at or near the inner end of the blade and even below the inner surface of the inner windmill supporting ring structure. Fig 3 shows a possible construction: in this case the blade 16 has a spindle or stub shaft 22 which comes right through a suitable bearing carried by the inner ring 11. The projecting portion of shaft 22 carries a lever or crank 24 to which is attached one end of the spring/damper tension unit 26. The other, anchor, end 28 may well be secured to the said inner windmill supporting ring or hoop 12.

The spring/damper unit comprises a coil spring surrounding a hydraulic damper. A possible damper is illustrated schematically in Fig 4.

It has an oil-filled cylinder 30 through which passes a rod 32 carrying a piston 34 which divides the cylinder 30 into two chambers 33, 35. An extension 36 of the cylinder surrounds a projecting portion of this rod and is attached to a lug 38 for attachment to ring 11.

The opposite end of the rod 32 is attached to the blade 16. The spring 40 is a tension spring attached at one end to a cross piece 42 fast with the rod 32 and at its other end to the lug 38.

The piston is pierced by a narrow bore 44. This allows the piston to move in the cylinder at a rate limited by flow of oil through the bore. Such a damper allows the blade 16 to adjust to changes in wind speed in an orderly and controlled manner. However, it allows little or no change in response to very short term fluctuations in wind speed. These are damped out.

Other forms of damper may be employed, of course. A possibility is a damper closely akin to the type used in a motor car suspension, but equipped with sufficient seals that it can tolerate inversion. As mentioned abo... , friction dampers could also be employed.

A preferred feature of this invention is to arrange that the damper does not unduly retard motion of the blades 16 if the wind speed suddenly increases very rapidly. For this purpose the piston 34 has a further bore 46 of larger cross section but closed by a spring loaded relief valve 48. Normally there is no flow through this, but if a sufficiently forceful gust of wind strikes the blade the resultant force on the rod 32 causes a rise in pressure in the chamber 33 great enough to cause the relief valve to open and allow oil flow through the bore 46. This allows the piston 34 to move rapidly in the cylinder 30 and hence allows the blade 16 to feather rapidly.

An alternative would be a by-pass pipe between the two chambers, outside the cylinder, with a pressure relief valve fitted to this pipe.

It is emphasised that dampers such as silentbloc bushes, although possibly helpful at pivot points, are not capable of dealing with low frequency damping, for example 60 -300 cycles per minute, nor would they have the necessary amplitude of stroke by a very large factor.

As mentioned, a typical number of blades 16 is thirty six but a lesser number of blades could be used, or a greater number. It is envisaged that the number of blades will not be less than six and preferably not less than twelve. It is also unlikely that it will be worth utilising more than sixty blades.

A suitable blade construction is described in my co-pending application filed simultaneously and entitled "The Design of a Windmill Blade". This is incorporated herein by reference.

## Claims

1. A windmill having an annular supporting structure with a plurality of blades pivotally mounted thereto and spring means connected to the blades to permit pivotal motion of the blades in response to variation in wind pressure, characterised by the provision of damping means to retard pivotal motion of the blades.

2. A windmill according to claim 1 wherein the supporting structure comprises inner and outer annular supports with the blades extending between them.

3. A windmill according to claim 1 wherein the damping means is hydraulic.

4. A windmill according to any one of the preceding claims wherein the damping means includes relief means operative to reduce the damping and enhance the rate of yield in response to a sufficiently great increase in wind force on the blades.

5. A windmill according to claim 4 wherein the damping means is hydraulic and the relief means is a valve arranged to open if pressure differential across the valve exceeds a predetermined limit.

Rotation

16

14

12

10

FIG.1a

FIG.1b

33  44  35  40

46  48

32

42

40  30  34  36  38

FIG.4

Rotation

16

20

18

Wind

## FIG.2

Rotation

16

22

26

12

## FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | FR-A- 909 378 (MILLER) <br> * Page 1, lines 15-39 * | 1 | F 03 D 7/02 |
| Y | US-A-3 470 748 (BARNES) <br> * Abstract * | 1 | |
| A | | 3 | |
| A | GB-A-2 036 193 (KLING) <br> * Abstract * | 2 | |
| A | DE-A-3 126 677 (ERNO) <br> * Page 6, line 11 - end * | 1 | |

TECHNICAL FIELDS
SEARCHED (Int. Cl.5)

F 03 D

The present search report has been drawn up for all claims

| Place of search | Date of completion of the search | Examiner |
|---|---|---|
| THE HAGUE | 29-06-1990 | DE WINTER P.E.F. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

                            

& : member of the same patent family, corresponding
   document

EPO FORM 1503 03.82 (P0401)